# EUROPEAN PATENT APPLICATION

(11) **EP 4 804 130 A1**
(43) Date of publication of application: **09.09.2026**
(21) Application number: 24903973.6
(22) Date of filing: 04.11.2024
(51) Int. Cl.: G06T 11/00, G06F 40/279, G06F 3/04883, G06F 40/30, G06V 10/86, G06F 16/9535

(54) **IMAGE GENERATION METHOD USING GENERATIVE MODEL, AND COMPUTING DEVICE FOR PERFORMING SAME**

(30) Priority: 13.12.2023 KR 20230181168
(71) Applicant: Samsung Electronics Co., Ltd., Suwon-si, Gyeonggi-do 16677 (KR)
(72) Inventor: KWON, Jungmin, Suwon-si, Gyeonggi-do 16677 (KR); KIM, Jeongseop, Suwon-si, Gyeonggi-do 16677 (KR); PARK, Chiyoun, Suwon-si, Gyeonggi-do 16677 (KR); SHIN, Hyeji, Suwon-si, Gyeonggi-do 16677 (KR)
(74) Representative: Gulde & Partner
(86) International application number: PCT/KR2024/017159
(87) International publication number: WO 2025/127406

(57) **Abstract**

This method for generating an image by using a generative model comprises the steps of: receiving a dialogue; obtaining a prompt corresponding to the dialogue by inputting the dialogue into a prompt generative model; and obtaining an image by inputting the prompt into an image generative model, wherein the prompt includes a description reflecting the context of the dialogue, and the prompt generative model can be a language model trained through a plurality of dialogue-prompt pairs.

## Description

### Technical Field

The present disclosure relates to a method of generating an image by using a generative model, and more particularly, to a method of generating an image corresponding to a dialogue by using a generative model.

### Background Art

Generative artificial intelligence (AI) technology refers to a technology capable of learning patterns and structures of massive training data and, based thereon, generating new data similar to input data. Generative AI technology may be used to obtain images corresponding to text.

On the other hand, with the recent rise in messenger-based online communication activities, some devices or programs may support a function of transforming a dialogue of a user into an image. However, in some cases, the dialogue and the transformed image may not be appropriately matched with each other. Separately inputting an image description in order to generate an image matching a dialogue may help generate an appropriate image, but may be inconvenient for a user.

### Disclosure of Invention

### Solution to Problem

A method of generating an image by using a generative model, according to an embodiment of the present disclosure, may include receiving a dialogue. The method may include obtaining a prompt corresponding to the dialogue by inputting the dialogue to a prompt generative model. The method may include obtaining an image by inputting the prompt to an image generative model. The prompt may include a description reflecting a context of the dialogue. The prompt generative model may be a language model trained through a plurality of dialogue-prompt pairs.

A computing device according to an embodiment of the present disclosure may include an input/output interface, memory, and at least one processor. The input/output interface may receive a user input of requesting image processing. The input/output interface may output an image processed according to the user input. The memory may store instructions for processing an image. The at least one processor may execute the instructions. The at least one processor may receive a dialogue. The at least one processor may obtain a prompt corresponding to the dialogue by inputting the dialogue to a prompt generative model. The at least one processor may obtain an image by inputting the prompt to an image generative model. The prompt may include a description reflecting a context of the dialogue. The prompt generative model may be a language model trained through a plurality of dialogue-prompt pairs.

A non-transitory computer-readable recording medium according to an embodiment of the present disclosure may store a program for causing a computer to perform at least one of the embodiments of the disclosed methods.

A computer program according to an embodiment of the present disclosure may be stored in a medium to cause a computer to perform at least one of the embodiments of the disclosed methods.

### Brief Description of the Drawings

FIG. 1 is a conceptual diagram for describing a process of generating an image by using a prompt generative model, according to an embodiment of the present disclosure.
FIG. 2 is a flowchart for describing a method of generating an image by using a prompt generative model, according to an embodiment of the present disclosure.
FIG. 3 is a diagram for describing a pair between a dialogue input to a prompt generative model and a prompt output by the prompt generative model, according to an embodiment of the present disclosure.
FIG. 4 is a diagram for describing information included in a prompt, according to an embodiment of the present disclosure.
FIG. 5 is a diagram for describing information included in a prompt, according to an embodiment of the present disclosure.
FIG. 6 is a conceptual diagram for describing a method of generating a prompt by using a prompt generative model, according to an embodiment of the present disclosure.
FIG. 7 is a conceptual diagram for describing a method of training a prompt generative model and generating a prompt by using a dialogue-prompt example pair, according to an embodiment of the present disclosure.
FIG. 8 is a conceptual diagram for describing a method of training a dialogue-image generative model and generating an image by using a dialogue-image example pair, according to an embodiment of the present disclosure.
FIG. 9 is a flowchart for describing a method of generating an image by using a prompt generative model, according to an embodiment of the present disclosure.
FIG. 10 is a flowchart for describing a method of generating an image by using a prompt generative model, according to an embodiment of the present disclosure.
FIG. 11 is a flowchart for describing a method of performing communication with a counterpart user based on an image generated by using a prompt generative model, according to an embodiment of the present disclosure.
FIG. 12 is a diagram for describing a configuration of a computing device for performing image generation by using a prompt generative model, according to an embodiment of the present disclosure.

### Mode for the Invention

In describing the present disclosure, descriptions of technical contents that are well known in the technical field to which the present disclosure belongs and are not directly related to the present disclosure will be omitted. By omitting unnecessary descriptions, the present disclosure may be described more clearly without obscuring the gist of the present disclosure. Terms as used herein are those defined by taking into account the functions in the present disclosure, but the terms may vary depending on the intention of users or those of ordinary skill in the art, precedents, or the like. Therefore, the definitions should be made based on the contents throughout the present specification.

For the same reason, some elements in the accompanying drawings are exaggerated, omitted, or schematically illustrated. In addition, the size of each element does not entirely reflect the actual size. The same reference numerals are assigned to the same or corresponding elements in the drawings.

Advantages and features of the present disclosure, and methods of achieving them will be clarified with reference to embodiments described below in detail with reference to the accompanying drawings. However, the present disclosure is not limited to the following embodiments and may be embodied in different various forms. Embodiments presented below are provided so that the present disclosure will be thorough and complete and will fully convey the concept of the present disclosure to those of ordinary skill in the art. An embodiment of the present disclosure may be defined by the claims. The same reference numerals denote the same elements throughout the specification. Furthermore, in describing an embodiment of the present disclosure, when the detailed description of the relevant functions or configurations is determined to unnecessarily obscure the gist of the present disclosure, the detailed description thereof may be omitted herein. Terms as used herein are those defined by taking into account the functions in the present disclosure, but the terms may vary depending on the intention of users or those of ordinary skill in the art, precedents, or the like. Therefore, the definitions should be made based on the contents throughout the specification.

In an embodiment, it will be understood that the respective blocks of the flowcharts and combinations of the flowcharts may be performed by computer program instructions. Computer program instructions may be mounted on processors of general-purpose computers, special-purpose computers, or other programmable data processing apparatuses, and the instructions to be executed through the processors of the computers or other programmable data processing apparatuses may generate a means for performing the functions described in the flowchart block(s). Because computer program instructions may also be stored in a computer-executable or computer-readable memory that may direct the computer or other programmable data processing apparatus so as to implement functions in a particular manner, the instructions stored in the computer-executable or computer-readable memory are also capable of producing an article of manufacture containing an instruction means for performing the functions described in the flowchart block(s). Computer program instructions may also be mounted on computers or other programmable data processing apparatuses.

In addition, each block in the flowcharts may represent part of a module, segment, or code that includes one or more executable instructions for executing a specified logical function(s). In an embodiment, the functions mentioned in blocks may occur out of order. For example, two blocks illustrated in succession may in fact be executed substantially concurrently, or the blocks may sometimes be executed in a reverse order, depending on the functions involved therein.

The term 'unit' as used in an embodiment of the present disclosure refers to a software element or a hardware element, such as a field programmable gate array (FPGA) or an application specific integrated circuit (ASIC), and the 'unit' may perform specific functions. However, the term 'unit' is not limited to software or hardware. The term 'unit' may be configured in an addressable storage medium or may be configured to reproduce one or more processors. In an embodiment, the term 'unit' may include elements, such as software elements, object-oriented software elements, class elements, and task elements, processes, functions, attributes, procedures, subroutines, segments of program code, drivers, firmware, microcodes, circuits, data, databases, data structures, tables, arrays, and variables. Functions provided through specific elements or specific 'units' may be combined to reduce the number thereof or may be separated into additional elements. In addition, in an embodiment, the 'unit' may include one or more processors.

Embodiments of the present disclosure relate to a method of generating an image by using a language model. Prior to describing specific embodiments, the meanings of terms frequently used in the present specification are defined.

In the present disclosure, 'generative artificial intelligence (AI)' may refer to AI technology capable of generating new text, images, etc. in response to input data (e.g., text, images, etc.). Representative examples of the generative AI are described in the 'generative model' section below.

In the present disclosure, the 'generative model' may refer to a neural network model that implements generative AI technology. The generative model may generate new data having features similar to the input data or new data corresponding to the input data by learning patterns and structures of training data. For example, when the input data is text and the generative model is requested to generate an image corresponding to the text, the generative model may generate a new image reflecting the context of original text.

In the present disclosure, a 'language model' may refer to a generative model for obtaining the most natural word sequence by assigning probabilities to word sequences. For example, the language model may obtain text as input data and output a word sequence describing the context of the obtained text. Although the term 'language model' is used in the present disclosure, this is not intended to limit the technical concept of the present disclosure, and the language model may be referred to as a generative model, an AI model, a language generative model, a natural language processing model, a text generative model, a dialogue simulator, a dialogue-based AI, a natural language understanding and generation system, or the like, depending on the intention. Among language models, a large language model (LLM) may be a language model composed of an artificial neural network having a larger number of parameters.

In the present disclosure, the generative model may include a 'prompt generative model.' The prompt generative model may obtain text as input data and generate a prompt by transforming the obtained text. The prompt generative model may generate a prompt corresponding to input data by learning patterns and structures of training text data. The prompt generative model may be a language model that outputs text reflecting a context of a dialogue (e.g., text that includes a description reflecting a context of a dialogue).

The 'prompt' may refer to input data for instructing an image generative model to perform a task. A prompt may collectively refer to input data for instructing a generative model to perform a task. However, in the present disclosure, the prompt has been described as meaning input data for instructing an 'image generative model' to perform a task so as to avoid semantic confusion.

In the present disclosure, the generative model may include an 'image generative model.' The image generative model may obtain text as input data and generate an image by transforming the obtained text. The image generative model may generate an image corresponding to input data by learning patterns and structures of training text data.

Hereinafter, a method of generating an image by using a language model and a computing device for performing the same, according to embodiments of the present disclosure, will be described with reference to the drawings.

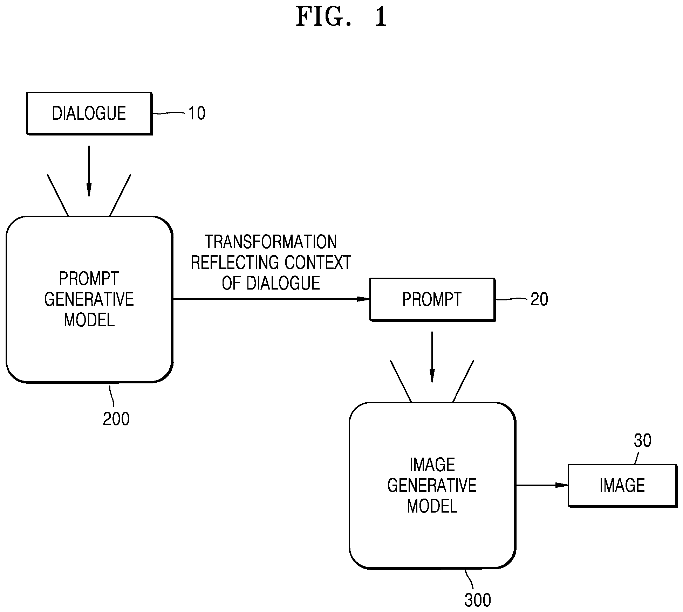

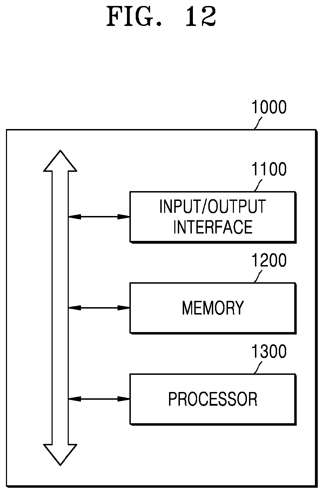

It is assumed that processes described in the present disclosure are performed by a computing device that supports an image processing function. Therefore, in the descriptions of FIGS. 1 to 12, the computing device is described as performing processes. Detailed components included in the computing device according to an embodiment are illustrated in FIG. 12, and the components are described in detail below.

In embodiments of the present disclosure, the computing device may obtain a prompt corresponding to a dialogue by inputting the dialogue to a prompt generative model, so as to generate an appropriate prompt to be input to an image generative model. An operation of finally generating an image from a dialogue may be performed by using two generative models. However, efficiency and performance may be improved by using a single generative model that integrally performs respective operations.

FIG. 1 is a conceptual diagram for describing a process of generating an image by using a prompt generative model, according to an embodiment of the present disclosure.

Referring to FIG. 1, the computing device may generate an image by using a plurality of generative models.

In an embodiment, the plurality of generative models may include a prompt generative model 200 and an image generative model 300.

The prompt generative model 200 is a model for obtaining a prompt 20 to be input to the image generative model 300. The prompt 20 may refer to input data for instructing the image generative model 300 to perform a task. The prompt 20 needs to be configured to be easily recognized by the image generative model 300, and the prompt generative model 200 may be a model that transforms input data into the prompt 20 so that the image generative model 300 may easily recognize the prompt 20.

The prompt generative model 200 may be a language model trained through a plurality of dialogue-prompt pairs. The prompt generative model 200 may be a language model trained through training data including a plurality of dialogue-prompt pairs. The prompt generative model 200 may be a general language model (e.g., an LLM) trained through various types of text data. The prompt generative model 200 may generate the prompt 20 from a new dialogue 10 by learning a transformation pattern between a dialogue and a prompt from the plurality of dialogue-prompt pairs. Of course, the learning method of the prompt generative model 200 does not limit the technical concept of the present disclosure.

In an embodiment, the prompt generative model 200 may obtain a dialogue 10 of a user as input data. For example, the dialogue 10 of the user may include everyday expressions exchanged between users, such as greetings, questions, or requests. Specifically, the dialogue 10 of the user may include everyday expressions such as 'Hi' or 'Would you like to go eat pizza?'

The dialogue 10 of the user may be text composed without considering whether the generative model (e.g., the image generative model) is capable of recognizing the dialogue 10 of the user. The prompt generative model 200 may be a model that generates the prompt 20 by reconfiguring the dialogue of the user so that another generative model (e.g., the image generative model) is capable of easily recognizing the dialogue 10 of the user as input data.

A data type of the dialogue 10 of the user input to the prompt generative model 200 does not limit the technical concept of the present disclosure. For example, the dialogue 10 of the user may be text data or voice data.

In an embodiment, the prompt generative model 200 may be a language model that transforms text into text. The dialogue 10 of the user may be text data obtained according to a user input. The prompt generative model 200 may generate the text-based prompt 20 by transforming the text-based dialogue 10.

In an embodiment, the prompt generative model 200 may be a language model that transforms voice into text. The dialogue 10 of the user may be voice data obtained according to a user input. The prompt generative model 200 may generate the text-based prompt 20 by transforming the voice-based dialogue 10.

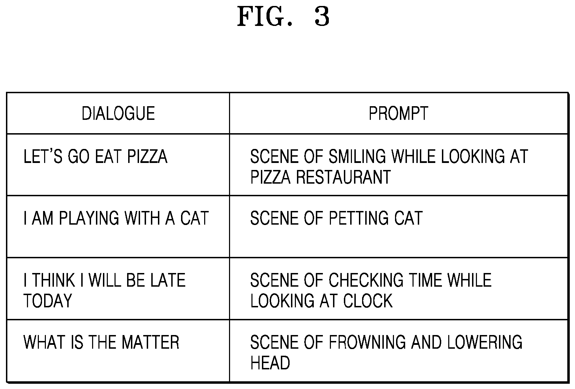

In an embodiment, the prompt generative model 200 may receive the dialogue 10 of the user and output the prompt 20. The prompt 20 may be text data generated by reflecting a context of the dialogue 10. The prompt 20 may include a description reflecting the context of the dialogue 10. Specifically, the prompt 20 may be text including a description for generating an image by reflecting the context of the dialogue 10 of the user. Alternatively, the prompt 20 may be text including a description of an image corresponding to the context of the dialogue 10 of the user. The configuration of the prompt 20 is described in detail below with reference to FIGS. 3 to 5.

The image generative model 300 is a model for obtaining an image 30 from the prompt 20. The prompt 20 may be data transformed by reflecting the context of the dialogue 10 of the user, and the image generative model 300 may finally output the image 30 from the prompt 20. The image 30 may be an image transformed by reflecting the context of the dialogue 10 of the user.

For example, the image generative model 300 may be a generative model trained through a plurality of prompt-image pairs. The image generative model 300 may be a generative model trained through training data including a plurality of prompt-image pairs. The image generative model 300 may generate the image 30 from a new prompt 20 by learning a transformation pattern between a prompt and an image from the plurality of prompt-image pairs. Of course, the learning method of the image generative model 300 does not limit the technical concept of the present disclosure.

In an embodiment, the image generative model 300 may obtain the prompt 20 as input data. The image generative model 300 may be a generative model that transforms text into an image. The dialogue 10 of the user may be text data obtained according to a user input. The prompt generative model 200 may generate the text-based prompt 20 by transforming the text-based dialogue 10.

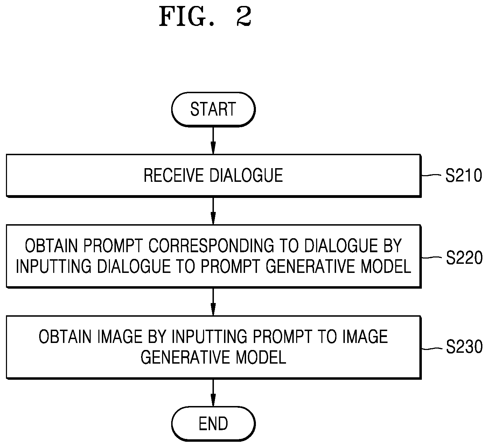

FIG. 2 is a flowchart for describing a method of generating an image by using a prompt generative model, according to an embodiment of the present disclosure. For convenience of explanation, parts that overlap those described with reference to FIG. 1 are summarized or omitted.

In operation S210, the computing device may receive a dialogue. The computing device may obtain, as the dialogue, a user input for communication between users. The computing device may obtain the dialogue through an input interface. The dialogue may be obtained in a text or voice form.

In operation S220, the computing device may obtain a prompt corresponding to the dialogue by inputting the dialogue to the prompt generative model.

In an embodiment, the prompt generative model may be a language model pre-trained through a plurality of dialogue-prompt pairs. The prompt generative model may be a model that learns a transformation pattern between the dialogue and the prompt from the plurality of dialogue-prompt pairs. The computing device may obtain the prompt from the dialogue by using the pre-trained prompt generative model.

In an embodiment, the obtained prompt may include a description reflecting the context of the dialogue. The obtained prompt may include text data describing the context of the dialogue.

In operation S230, the computing device may obtain an image by inputting the prompt to an image generative model.

In an embodiment, the image generative model may be a generative model pre-trained through a plurality of prompt-image pairs. The image generative model may be a model that learns a transformation pattern between the prompt and the image from the plurality of prompt-image pairs. The computing device may obtain the image from the prompt by using the pre-trained image generative model.

In an embodiment, the obtained image may be generated to correspond to the prompt. Since the prompt reflects the context of the dialogue, the obtained image may also reflect the context of the dialogue. The obtained image may include at least one image composed by reflecting the context of the dialogue.

FIG. 3 is a diagram for describing a pair of the dialogue input to the prompt generative model and the prompt output by the prompt generative model, according to an embodiment of the present disclosure. For reference, FIG. 3 is a diagram showing, in a table form, a correspondence relationship between the dialogue, which is the input data of the prompt generative model, and the prompt, which is the output data.

Referring to FIG. 3, the computing device may obtain the user input 'Let's go eat pizza' as a dialogue, and the obtained dialogue may be input to the prompt generative model. The prompt generative model may output the prompt 'a scene of smiling while looking at a pizza restaurant' in response to the user input 'Let's go eat pizza.'

For example, the text input 'Let's go eat pizza' may make it difficult for the image generative model to extract the context of the text input. From the data 'Let's go eat pizza,' the image generative model may generate an image centered on the meaning of 'pizza,' may generate an image centered on the meaning of 'eat,' or may generate an image centered on the meaning of 'go.' Therefore, an operation of transforming a dialogue into a prompt may be required so that the image generative model easily determines the context of the dialogue. In addition, the dialogue 'Let's go eat pizza' does not include content regarding what image should be generated, that is, a description of the image. Therefore, when such dialogue is directly input to the image generative model, the image output from the image generative model may not properly reflect the context of the dialogue or the intention of the user.

The prompt 'a scene of smiling while looking at a pizza restaurant' may include a description of an action corresponding to the context of the dialogue 'Let's go eat pizza.' That is, the prompt 'a scene of smiling while looking at a pizza restaurant' may include a description of an action of 'looking at a pizza restaurant' and an action of 'smiling.' Of course, the prompt may include a plurality of descriptions of an action, or may include a single description.

In an embodiment, as illustrated in FIG. 3, the prompt is configured as 'a scene of smiling while looking at a pizza restaurant,' including descriptions of an action of 'looking at a pizza restaurant' and an action of 'smiling.' However, in consideration of the pattern learned by the image generative model, the prompt may also be configured to have a sentence structure of 'a scene of looking at a pizza restaurant + a scene of smiling.'

As another example, the prompt may be configured to have a structure of 'looking at a pizza restaurant + smiling,' while having the same meaning. The structure of the prompt is configured to enable the image generative model to easily determine the context of the prompt as input data, and is not intended to limit the technical concept of the present disclosure.

The computing device may obtain the user input 'I am playing with a cat' as a dialogue, and the obtained dialogue may be input to the prompt generative model. The prompt generative model may output the prompt 'a scene of petting a cat' in response to the user input 'I am playing with a cat.'

For example, the text input 'I am playing with a cat' may make it difficult for the image generative model to extract the context of the text input. From the data 'I am playing with a cat,' the image generative model may generate an image centered on the meaning of 'cat' or may generate an image centered on the meaning of 'playing.' Therefore, an operation of transforming a dialogue into a prompt may be required so that the image generative model easily determines the context of the dialogue.

The prompt 'petting a cat' may include a description of an action corresponding to the context of the dialogue 'I am playing with a cat.' That is, the prompt 'petting a cat' may include an action of 'petting a cat.'

In an embodiment, as illustrated in FIG. 3, the prompt is configured to include a description of the action of 'petting a cat.' However, in consideration of the pattern learned by the image generative model, the prompt may also be configured to have a structure of 'petting a cat.' The structure of the prompt is configured to enable the image generative model to easily determine the context of the prompt as input data, and is not intended to limit the technical concept of the present disclosure.

In an embodiment, the same dialogue may be transformed into various prompts according to the training of the prompt generative model. For example, the prompt generative model may generate the prompt 'a scene of petting a cat' from the input data 'I am playing with a cat,' as illustrated in FIG. 3. However, the prompt generative model may generate one of various prompts, such as 'a scene of feeding a cat' or 'a scene of playing with a cat by using a toy.'

In an embodiment, the computing device may obtain a user input 'I think I will be late today' as a dialogue, and the obtained dialogue may be input to the prompt generative model. The prompt generative model may output a prompt 'a scene of checking the time while looking at a clock' in response to the user input 'I think I will be late today.'

In an embodiment, the computing device may obtain a user input 'What's the matter' as a dialogue, and the obtained dialogue may be input to the prompt generative model. The prompt generative model may output a prompt 'a scene of frowning and lowering a head' in response to the user input 'What's the matter.'

Since the method of obtaining the respective prompts is the same as the method of obtaining the prompts 'a scene of smiling while looking at a pizza restaurant' and 'a scene of petting a cat,' the redundant description thereof is omitted.

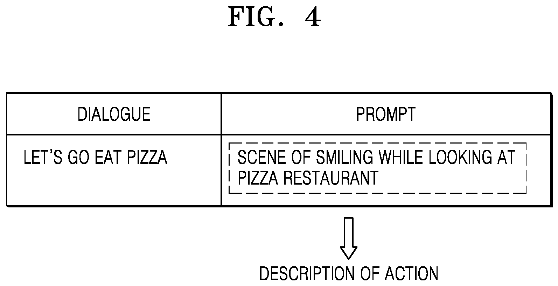

FIG. 4 is a diagram for describing information included in a prompt, according to an embodiment of the present disclosure.

Referring to FIG. 4, the prompt generative model may obtain a dialogue 'Let's go eat pizza' as input data and output a prompt 'a scene of smiling while looking at a pizza restaurant.' In an embodiment, the prompt may include a description of an action of an object corresponding to the context of the dialogue.

The computing device may receive a dialogue of a user and obtain a prompt corresponding to the context of the dialogue by using the prompt generative model. The prompt may include a description of an action of an object corresponding to the context of the dialogue.

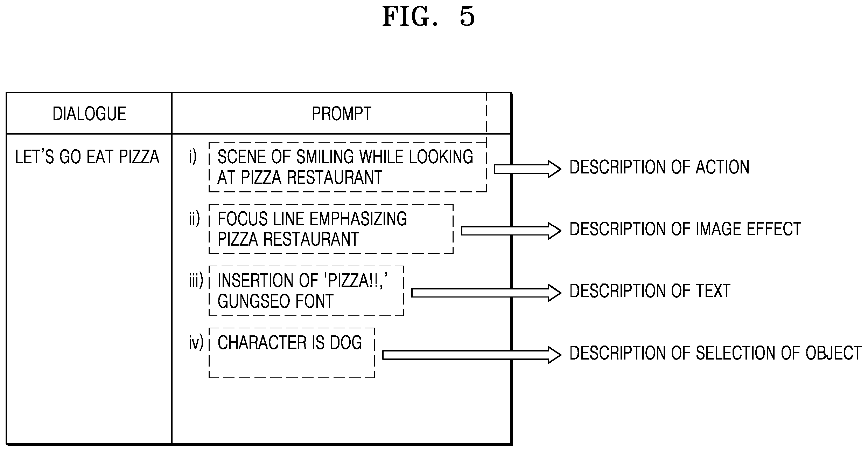

In an embodiment, the prompt may include, as essential information, the description of the action of the object corresponding to the context of the dialogue. The prompt may further include, in addition to the description of the action of the object, additional information. The additional information included in the prompt is described in detail below with reference to FIG. 5.

For convenience of explanation, the prompt 'a scene of smiling while looking at a pizza restaurant' illustrated in FIG. 4 is described as an example. The prompt includes a description of 'looking at a pizza restaurant' and a description of 'smiling.' The description of 'looking at a pizza restaurant' and the description of 'smiling' may each be a description of an action of an object that is not explicitly expressed.

Although the example prompt described with reference to FIG. 4 is configured so that the object is not explicitly expressed, the object may also be set. For example, the prompt may be generated to have a structure of 'a dog character smiling while looking at a pizza restaurant' in response to the dialogue 'Let's go eat pizza.'

FIG. 5 is a diagram for describing information included in a prompt, according to an embodiment of the present disclosure. For convenience of explanation, parts that overlap those described with reference to FIG. 4 are summarized or omitted.

Referring to FIG. 5, the prompt generative model may obtain a dialogue 'Let's go eat pizza' as input data and output a prompt "i) a scene of smiling while looking at a pizza restaurant, ii) a focus line emphasizing the pizza restaurant, iii) insertion of 'Pizza!!,' Gungseo font, and iv) a character is a dog."

In an embodiment, the prompt may include a description of an action of an object corresponding to the context of the dialogue. The prompt may include data, "i) a scene of smiling while looking at a pizza restaurant," as the description of the action of the object. The description of the action of the object may be included as essential information of the prompt. Since the description of the action of the object is redundant with that provided with reference to FIG. 4, the description thereof is omitted.

In an embodiment, the prompt may include a description of an image effect. The prompt may include data, "ii) a focus line emphasizing the pizza restaurant," as the description of the image effect. The description of the image effect may be included as additional information of the prompt, and the prompt may be configured without including the description of the image effect.

The description of the image effect may be variously expressed with respect to effects that implement an image, such as the background of the image (e.g., no background, sky background, etc.), the number of colors used in the image (e.g., black and white image, color image, etc.), and drawing style (e.g., cartoon style, cubist style, etc.).

In an embodiment, the prompt may include a description of text to be inserted. The prompt may include data, "iii) insertion of 'Pizza!!', Gungseo font," as the description of the text to be inserted. The description of the text to be inserted may be included as additional information of the prompt, and the prompt may be configured without including the description of the text to be inserted.

The description of the text to be inserted may be variously expressed with respect to effects that are applicable when text is inserted into an image, such as the content, font, size, and color of the text to be inserted and effects applied to the text to be inserted (e.g., italics, bold, emphasis, three-dimensional (3D) expression, etc.).

In an embodiment, the prompt may include a description of selection of an object. The prompt may include data, "iv) a character is a dog," as the description of the selection of the object. The description of the selection of the object may be included as additional information of the prompt, and the prompt may be configured without including the description of the selection of the object.

The description of the selection of the object may be variously expressed through a description for specifying the object, such as a type, a size, or a color of the object.

In an embodiment, the prompt may necessarily include a description of an action of an object corresponding to the context of the dialogue. The prompt may optionally further include at least one of the description of the image effect, the description of the text to be inserted, and the description of the selection of the object.

For example, the prompt of FIG. 5 is configured to have a structure including "i) a scene of smiling while looking at a pizza restaurant, ii) a focus line emphasizing the pizza restaurant, iii) insertion of 'Pizza!!', Gungseo font, and iv) a character is a dog." However, some of "ii) a focus line emphasizing the pizza restaurant, iii) insertion of 'Pizza!!', Gungseo font, and iv) a character is a dog" may be excluded from the prompt. The prompt may be configured to have a structure including "i) a scene of smiling while looking at a pizza restaurant, ii) insertion of 'Pizza!!,' Gungseo font, and iii) a character is a dog", excluding the description of the image effect.

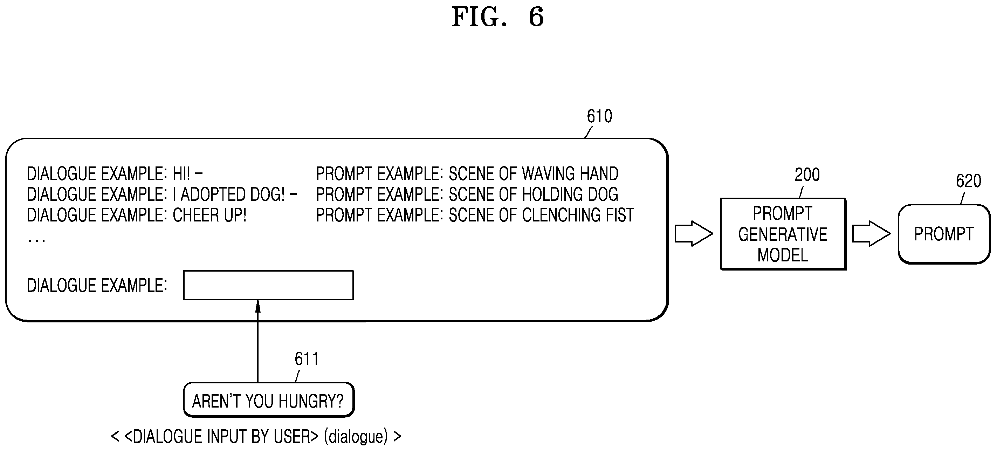

FIG. 6 is a conceptual diagram for describing a method of generating a prompt by using a prompt generative model, according to an embodiment of the present disclosure. For convenience of explanation, parts that overlap those described with reference to FIGS. 1 and 2 are summarized or omitted.

Referring to FIG. 6, a computing device may obtain a prompt 620 corresponding to a dialogue by inputting the dialogue to a prompt generative model 200.

In an embodiment, a dialogue 611 may be input to the prompt generative model 200, and the prompt generative model 200 may generate the prompt 620 corresponding to the dialogue 611.

Of course, as illustrated in FIG. 6, data input to the prompt generative model 200 may be a combination 610 of at least one dialogue-prompt example pair and a dialogue. The combination 610 of the at least one dialogue-prompt example pair and the dialogue may be data in which the at least one dialogue-prompt example pair and the dialogue are listed.

In an embodiment, the at least one dialogue-prompt example pair may be obtained by using an LLM trained through a plurality of dialogue-prompt pairs, or may be data input by a user.

For example, the at least one dialogue-prompt example pair may include, as a pair, a dialogue example 'Hi!' and a corresponding prompt example 'a scene of waving a hand.' The at least one dialogue-prompt example pair may include, as a pair, a dialogue example 'I adopted a dog!' and a corresponding prompt example 'a scene of holding a dog.' The at least one dialogue-prompt example pair may include, as a pair, a dialogue example 'Cheer up!' and a corresponding prompt example 'a scene of clenching a fist.'

In an embodiment, the combination 610 of the at least one dialogue-prompt example pair and the dialogue may be data including the dialogue 611. The dialogue 611 may be data input by the user. The computing device may obtain, as the dialogue 611, text data input by the user through an input interface, or may obtain, as the dialogue 611, voice data input by a user. For example, the computing device may obtain the dialogue 611 'Aren't you hungry?' based on a user input.

In an embodiment, the computing device may obtain the prompt 620 corresponding to the combination 610 of the at least one dialogue-prompt example pair and the dialogue by inputting the combination 610 of the at least one dialogue-prompt example pair and the dialogue to the prompt generative model 200. The obtained prompt 620 may be a description reflecting the context of the dialogue 611. The obtained prompt 620 may be a description reflecting the context of the dialogue 611 based on the at least one dialogue-prompt example pair.

In an embodiment, the prompt generative model 200 may output the prompt 620 corresponding to the dialogue 611 based on a relationship between the dialogue example and the prompt example included in the at least one dialogue-prompt example pair in the combination 610 of the at least one dialogue-prompt example pair and the dialogue.

In an embodiment, the prompt generative model 200 may be an LLM trained by using various text data. When the prompt generative model 200 is an LLM and the combination 610 of the at least one dialogue-prompt example pair and the dialogue is input to the prompt generative model 200, as described above, the prompt generative model 200 may be fine-tuned by the at least one dialogue-prompt example pair included in the input. Accordingly, the prompt generative model 200 may output the prompt 620 corresponding to the dialogue 611 based on a relationship between the dialogue example and the prompt example included in the at least one dialogue-prompt example pair. In other words, the prompt generative model 200 may be additionally trained by using the at least one dialogue-prompt example pair and may output the prompt 620 corresponding to the dialogue 611 by reflecting the training result.

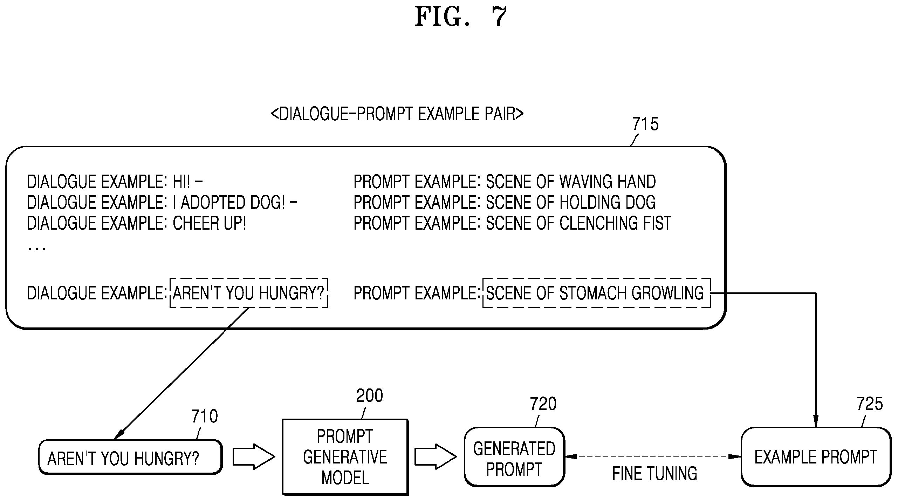

FIG. 7 is a conceptual diagram for describing a method of training a prompt generative model and generating a prompt by using a dialogue-prompt example pair, according to an embodiment of the present disclosure.

For convenience of explanation, parts that overlap those described with reference to FIG. 1 are summarized or omitted.

Referring to FIG. 7, a computing device may obtain a prompt 720 corresponding to a dialogue 710 by inputting the dialogue 710 to a prompt generative model 200.

In an embodiment, the prompt generative model 200 may be a language model trained through a plurality of dialogue-prompt pairs. The prompt generative model 200 may be a language model pre-trained by using a plurality of pieces of text data.

In an embodiment, for lightweight implementation, the prompt generative model 200 may not be constructed to have a sufficiently large model size and may be trained through a small amount of training data. In this case, to obtain an appropriate prompt 720, an operation of fine-tuning the prompt 720 output by the prompt generative model 200 may be required. A weight of the prompt generative model 200 may be updated through the fine-tuning operation, and the fine-tuned prompt generative model 200 may output a more appropriate prompt in response to the dialogue 710. The fine-tuned prompt generative model 200 may output, as a prompt, a description that more appropriately reflects the context of the dialogue 710.

In the present disclosure, at least one dialogue-prompt example pair 715 for fine-tuning the prompt generative model 200 and a plurality of dialogue-prompt pairs for training the prompt generative model 200 may be data regarding pairs of dialogues and prompts corresponding to each other, respectively. However, the at least one dialogue-prompt example pair 715 is data used to fine-tune the prompt 720 output by the prompt generative model 200, and the plurality of dialogue-prompt pairs are training data used when the prompt generative model 200 is pre-trained.

In an embodiment, the prompt generative model 200 may fine-tune the prompt 720 based on the at least one dialogue-prompt example pair.

For example, the computing device may obtain the prompt 720 from the dialogue 710 by using the pre-trained prompt generative model 200. The computing device may retrain the pre-trained prompt generative model 200 based on the at least one dialogue-prompt example pair. Since the pre-trained prompt generative model 200 is retrained based on the at least one dialogue-prompt example pair, the weight thereof may be updated.

A method for fine-tuning does not limit the technical concept of the present disclosure. For example, the prompt generative model 200 may be retrained through a method for fine-tuning, such as Stochastic Gradient Descent (SGD), Adaptive Moment Estimation (ADAM), Adaptive Gradient (Adagrad), and Nesterov Accelerated Gradient (NAG).

In an embodiment, the at least one dialogue-prompt example pair 715 may be obtained by using a separate LLM trained through the plurality of dialogue-prompt pairs, or may be data input by a user.

For example, the at least one dialogue-prompt example pair may include, as a pair, a dialogue example 'Hi!' and a corresponding prompt example 'a scene of waving a hand.' The at least one dialogue-prompt example pair may include, as a pair, a dialogue example 'I adopted a dog!' and a corresponding prompt example 'a scene of holding a dog.' The at least one dialogue-prompt example pair may include, as a pair, a dialogue example 'Cheer up!' and a corresponding prompt example 'a scene of clenching a fist.'

Hereinafter, an example of an operation of retraining the prompt generative model 200 so that the computing device fine-tunes the prompt 720 generated by the prompt generative model 200 is described in detail.

In an embodiment, the prompt generative model 200 may obtain a dialogue 710 of a user. The obtained dialogue 710 may be, for example, a text input or a voice input, such as 'Aren't you hungry?'

The prompt generative model 200 may generate the prompt 720 corresponding to the dialogue 710 'Aren't you hungry?' The generated prompt 720 may include a description reflecting the context of the dialogue 710 'Aren't you hungry?' For example, the prompt 720 may include text data describing the context of the dialogue 710 'Aren't you hungry?' such as 'a scene of a stomach growling,' 'a scene of holding a stomach', and 'a scene of imagining food one wants to eat.'

In an embodiment, the computing device may use the prompt generative model 200 to generate a single prompt or a plurality of prompt lists.

In an embodiment, the computing device may obtain at least one dialogue-prompt example pair. The computing device may obtain, from the at least one dialogue-prompt example pair 715, a dialogue example corresponding to the dialogue 710 input to the prompt generative model 200.

For example, the computing device may extract the dialogue example 'Aren't you hungry?' from the at least one dialogue-prompt example pair 715 in response to the dialogue 710 'Aren't you hungry?' input to the prompt generative model 200. Although FIG. 7 illustrates that the dialogue 710 input to the prompt generative model 200 and the dialogue example extracted from the at least one dialogue-prompt example pair 715 are composed of the same expression, the dialogue 710 and the dialogue example may not exactly match each other. The computing device may extract a dialogue example from the at least one dialogue-prompt example pair 715 within a range in which the dialogue example shares the context of the dialogue 710. The dialogue 710 and the dialogue example may literally match each other, or the context of the dialogue 710 and the context of the dialogue example may be the same as each other.

In an embodiment, the computing device may extract, from the at least one dialogue-prompt example pair 715, a prompt example corresponding to the extracted dialogue example. For example, the computing device may extract the dialogue example from the at least one dialogue-prompt example pair 715. The computing device may obtain the dialogue example 'Aren't you hungry?' from the at least one dialogue-prompt example pair 715. The computing device may extract a prompt example corresponding to the dialogue example 'Aren't you hungry?' The computing device may extract the prompt example 'a scene of holding a stomach' in response to "Aren't you hungry?"

In an embodiment, the computing device may fine-tune the prompt generative model 200 by comparing the prompt 720 generated by the prompt generative model 200 with the prompt example extracted from the at least one dialogue-prompt example pair 715. The computing device may retrain the prompt generative model 200 based on the extracted prompt example. The computing device may update the weight of the prompt generative model 200 based on the extracted prompt example.

In an embodiment, the computing device may fine-tune the prompt generative model 200 based on the difference between the prompt 720 generated by the prompt generative model 200 and the prompt example extracted from the at least one dialogue-prompt example pair 715. For example, the computing device may set, as a loss function, the difference between the prompt 720 generated by the prompt generative model 200 and the prompt example extracted from the at least one dialogue-prompt example pair 715, and may retrain the prompt generative model 200 so that the loss function is minimized.

However, a method by which the computing device fine-tunes the prompt generative model 200 is only an example and does not limit the technical concept of the present disclosure. For example, various methods, including SGD and ADAM, may be used as the fine-tuning method.

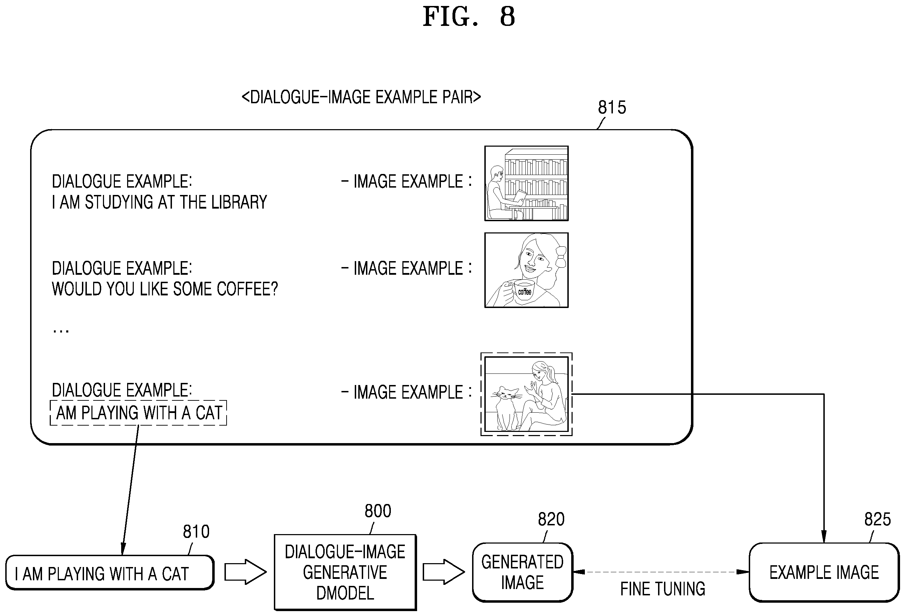

FIG. 8 is a conceptual diagram for describing a method of training a dialogue-image generative model and generating an image by using a dialogue-image example pair, according to an embodiment of the present disclosure.

For convenience of explanation, parts that overlap those described with reference to FIGS. 1 and 7 are summarized or omitted.

Referring to FIG. 8, a computing device may obtain an image 820 corresponding to a dialogue 810 by inputting the dialogue 810 to a dialogue-image generative model 800.

In an embodiment, the dialogue-image generative model 800 may be a single generative model that integrally performs the operations performed by the prompt generative model 200 and the image generative model 300 described with reference to FIGS. 1 and 7. For example, the dialogue-image generative model 800 may be a generative model that performs an operation of transforming the dialogue 810 into a prompt and generating the image 820 based on the prompt, or may be a generative model that performs an operation of generating the image 820 from the dialogue 810. A network structure of the dialogue-image generative model 800 does not limit the technical concept of the present disclosure. As a result, the dialogue-image generative model 800 may be a generative model that receives the dialogue 810 and outputs the image 820 corresponding to the received dialogue 810.

In an embodiment, the dialogue-image generative model 800 may be a generative model trained through a plurality of dialogue-image pairs. The dialogue-image generative model 800 may be a pre-trained generative model configured to transform a plurality of pieces of text data into image data.

In an embodiment, for lightweight implementation, the dialogue-image generative model 800 may not be constructed to have a sufficiently large model size and may be trained through a small amount of training data. In this case, to obtain an appropriate image 820, an operation of fine-tuning the image 820 output by the dialogue-image generative model 800 may be required. A weight of the dialogue-image generative model 800 may be updated through the fine-tuning operation, and the fine-tuned dialogue-image generative model 800 may output a more appropriate image in response to the dialogue 810. The fine-tuned dialogue-image generative model 800 may output an image that more appropriately reflects the context of the dialogue 810, compared to the generated image 820.

In the present disclosure, at least one dialogue-image example pair 815 for fine-tuning the dialogue-image generative model 800 and a plurality of dialogue-image pairs for training the dialogue-image generative model 800 may be data regarding pairs of dialogues and images corresponding to each other, respectively. However, the at least one dialogue-image example pair 815 is data used to fine-tune the image 820 output by the dialogue-image generative model 800, and the plurality of dialogue-image pairs are training data used when the dialogue-image generative model 800 is pre-trained.

In an embodiment, the dialogue-image generative model 800 may fine-tune the image 820 based on the at least one dialogue-image example pair 815.

For example, the computing device may obtain the image 820 from the dialogue 810 by using the pre-trained dialogue-image generative model 800. The computing device may retrain the pre-trained dialogue-image generative model 800 based on the at least one dialogue-image example pair 815. Since the pre-trained dialogue-image generative model 800 is retrained based on the at least one dialogue-image example pair 815, the weight thereof may be updated.

A method for fine-tuning does not limit the technical concept of the present disclosure. For example, the dialogue-image generative model 800 may be retrained through a method for fine-tuning, such as SGD, ADAM, Adagrad, and NAG.

In an embodiment, the at least one dialogue-image example pair 815 may be obtained by using a separate generative model trained through the plurality of dialogue-image pairs, or may be data input by a user.

For example, the at least one dialogue-image example pair 815 may include, as a pair, a dialogue example 'I am studying at the library' and a corresponding image example 'a scene of reading a book with a library in the background.' The at least one dialogue-image example pair 815 may include, as a pair, a dialogue example 'Would you like some coffee?' and a corresponding image example 'a scene of holding a cup of coffee.' The at least one dialogue-image example pair 815 may include, as a pair, a dialogue example 'I am playing with a cat' and a corresponding image example 'a scene of clapping while looking at a cat.'

Hereinafter, an example of an operation of retraining the dialogue-image generative model 800 so that the computing device fine-tunes the image 820 generated by the dialogue-image generative model 800 is described in detail.

In an embodiment, the dialogue-image generative model 800 may obtain a dialogue 810 of a user. The obtained dialogue 810 may be, for example, a text input or a voice input 'I am playing with a cat.'

The dialogue-image generative model 800 may generate the image 820 corresponding to the dialogue 810 'I'm playing with a cat.' The generated image 820 may include an image describing the context of the dialogue 810 'I am playing with a cat.' For example, the image 820 may include an image describing a scene corresponding to the context of the dialogue 810 'I am playing with a cat' such as 'a scene of clapping while looking at a cat,' 'a scene of playing with a cat by using a cat toy,' or 'a scene of petting a cat.'

In an embodiment, the computing device may use the dialogue-image generative model 800 to generate a single image or a plurality of image lists.

In an embodiment, the computing device may obtain the at least one dialogue-image example pair 815. The computing device may obtain, from the at least one dialogue-image example pair 815, a dialogue example corresponding to the dialogue 810 input to the dialogue-image generative model 800.

For example, the computing device may extract the dialogue example 'I am playing with a cat' from the at least one dialogue-image example pair 815 in response to the dialogue 810 'I am playing with a cat' input to the dialogue-image generative model 800. Although FIG. 8 illustrates that the dialogue 810 input to the dialogue-image generative model 800 and the dialogue example extracted from the at least one dialogue-image example pair 815 are composed of the same expression, the dialogue 810 and the dialogue example may not exactly match each other. The computing device may extract a dialogue example from the at least one dialogue-image example pair 815 within a range in which the dialogue example shares the context of the dialogue 810. The dialogue 810 and the dialogue example may literally match each other, or the context of the dialogue 810 and the context of the dialogue example may be the same as each other.

In an embodiment, the computing device may extract, from the at least one dialogue-image example pair 815, an image example corresponding to the extracted dialogue example. For example, the computing device may extract the dialogue example from the at least one dialogue-image example pair 815. The computing device may obtain the dialogue example 'I am playing with a cat' from the at least one dialogue-image example pair 815. The computing device may extract an image example corresponding to the dialogue example 'I am playing with a cat.' The computing device may extract an image example describing 'a scene of clapping while looking at a cat' in response to the context of 'I am playing with a cat.'

In an embodiment, the computing device may fine-tune the dialogue-image generative model 800 by comparing the image 820 generated by the dialogue-image generative model 800 with an image example 825 extracted from the at least one dialogue-image example pair 815. The computing device may retrain the dialogue-image generative model 800 based on the extracted image example 825. The computing device may update the weight of the dialogue-image generative model 800 based on the extracted image example 825.

In an embodiment, the computing device may fine-tune the dialogue-image generative model 800 based on the difference between the image 820 generated by the dialogue-image generative model 800 and the image example 825 extracted from the at least one dialogue-image example pair 815. For example, the computing device may set, as a loss function, the difference between the image 820 generated by the dialogue-image generative model 800 and the image example 825 extracted from the at least one dialogue-image example pair 815, and may retrain the dialogue-image generative model 800 so that the loss function is minimized.

However, a method by which the computing device fine-tunes the dialogue-image generative model 800 is only an example and does not limit the technical concept of the present disclosure. For example, various methods, including SGD and ADAM, may be used as the fine-tuning method.

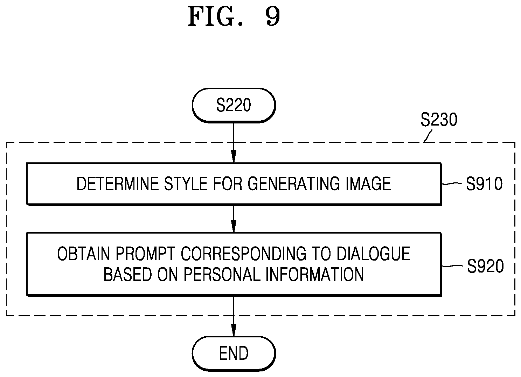

FIG. 9 is a flowchart for describing a method of generating an image by using a prompt generative model, according to an embodiment of the present disclosure.

For convenience of explanation, parts that overlap those described with reference to FIG. 2 are summarized or omitted.

Operation S230 of FIG. 2 may include operations S910 and S920.

Referring to FIG. 9, in operation S910, the computing device may determine a style for generating an image.

The computing device may determine, based on a user input, the style for generating the image. The computing device may obtain a user input of selecting the style for generating the image by using an input interface, and may determine, based on the user input, the style for generating the image.

In an embodiment, the style for generating the image may refer to a style in which an image generative model generates an image from a prompt. The style for generating the image may include a setting regarding an implementation scope of an image, which is output data of the image generative model.

For example, the computing device may provide, to a user, a user interface for the selection of the style for generating the image, and may obtain the user input related to the selection of the style for generating the image. The style for generating the image may include styles, such as 'exact,' 'creative,' etc.

In operation S920, the computing device may obtain an image corresponding to the prompt based on the determined style.

When the computing device obtains a user input of selecting an 'exact' style, the computing device may obtain an image exactly corresponding to the context of the prompt by using the image generative model. When the image generative model generates an image based on the 'exact' style, the image may be implemented in a limited style. When the computing device obtains a user input of selecting a 'creative' style, the computing device may generate an image corresponding to the context of the prompt by using the image generative model, but the generated image may be implemented more freely or creatively. Accordingly, the image generative model may implement an image in more diverse forms even when the image generative model receives the same dialogue as input.

In an embodiment, the computing device may obtain a plurality of images corresponding to the prompt based on the determined style, and provide a generated image list to the user. For example, the computing device may generate an image corresponding to the context of the prompt based on the user input related to the 'creative' style. In this case, the image may be implemented more freely, and a plurality of images may be generated in response to the prompt. The computing device may provide an image list to the user based on the plurality of generated images.

In an embodiment, the computing device may provide, based on a user input of selecting one image from the image list, a service for displaying one selected image or transmitting one selected image to an external user terminal.

In an embodiment, the computing device may obtain a plurality of images describing a dialogue. The computing device may obtain a user input of selecting a first image from the plurality of images. The computing device may transmit, based on the obtained user input, at least one of the first image and the dialogue to the external user terminal.

In an embodiment, the operation of obtaining the image based on the style information described with reference to FIG. 9 may be performed through the dialogue-image generative model 800 described with reference to FIG. 8, instead of the prompt generative model and the image generative model.

For example, the computing device may receive a dialogue of a user. The computing device may obtain an image by inputting the dialogue to the dialogue-image generative model. Specifically, the computing device may obtain style information related to the style for generating the image. The computing device may obtain an image corresponding to the dialogue based on the style information. The computing device may obtain an image by inputting a dialogue to the dialogue-image generative model, and the obtained image may be an image generated based on style information.

A description redundant with the description of the operation of obtaining the image based on the style information is omitted.

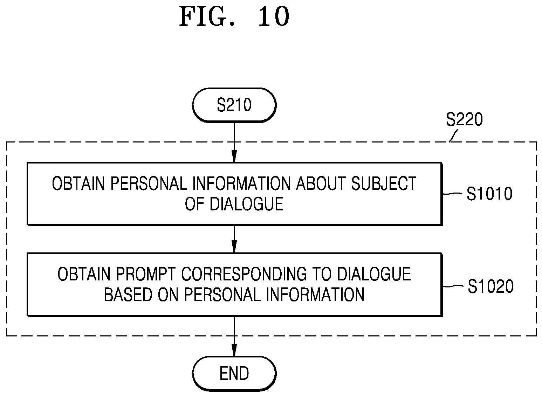

FIG. 10 is a flowchart for describing a method of generating an image by using a prompt generative model, according to an embodiment of the present disclosure.

For convenience of explanation, parts that overlap those described with reference to FIG. 2 are summarized or omitted.

Operation S220 of FIG. 2 may include operations S1010 and S1020.

Referring to FIG. 10, in operation S1010, the computing device may obtain personal information about a subject of the dialogue.

In an embodiment, the computing device may obtain personal information about a user who inputs a dialogue based on a user input. The computing device may obtain personal information about the subject of the dialogue by using an input interface.

In an embodiment, the personal information about the subject of the dialogue may include information related to personal identification by which a specific individual is distinguishable, state information by which the condition of the specific individual is identifiable, and information related to a surrounding environment of the specific individual.

For example, the information related to the personal identification may include information for distinguishing a specific person, such as a name, a resident registration number, age, gender, or place of birth, or information that is easily combined with other information to distinguish the specific person.

For example, the state information may include information by which a condition of a specific person is identifiable, such as a heart rate, a body temperature, a stress, or a sleep duration of a target person.

For example, the information related to the surrounding environment may include information about a surrounding environment of a specific person, such as information about a place where the specific person is located, information about weather at the place where the specific person is located, information about a temperature at the place where the specific person is located, and information about an altitude at the place where the specific person is located.

In an embodiment, the computing device may obtain, based on the position of the specific person, information related to the surrounding environment of the specific person. For example, the computing device may determine the position of the specific person and obtain information related to the surrounding environment based on the determined position.

In operation S1020, the computing device may obtain a prompt corresponding to a dialogue based on the personal information.

For example, the computing device may obtain information related to personal identification. The computing device may obtain information related to a user's gender (e.g., female) and age (e.g., 12 years old). The dialogue obtained in operation S210 may be 'Where shall we go today?' and the computing device may obtain a prompt corresponding to 'Where shall we go today?' based on the information related to the personal identification. The computing device may obtain a prompt 'Recommend places suitable for a teenage girl.'

As another example, the computing device may obtain state information. The computing device may obtain information about a user's stress index (e.g., high). The dialogue obtained in operation S210 may be 'Where shall we go today?' and the computing device may obtain a prompt corresponding to 'Where shall we go today?' based on the state information. The computing device may obtain a prompt 'Recommend places suitable for relaxation.'

As another example, the computing device may obtain information related to a surrounding environment. The computing device may obtain information about a place where the user is located (e.g., Seogwipo-si, Jeju-do) and information about weather at the place where the user is located (e.g., rain). The dialogue obtained in operation S210 may be 'Where shall we go today?' and the computing device may obtain a prompt corresponding to 'Where shall we go today?' based on the information related to the surrounding environment. The computing device may obtain a prompt 'Recommend places to visit on a rainy day in Seogwipo-si, Jeju-do.'

As another example, the computing device may obtain at least one of the information related to the personal identification, the state information, and the information related to the surrounding environment. The computing device may obtain a prompt corresponding to the dialogue based on at least one of the information related to the personal identification (e.g., female, 12 years old), the state information (e.g., high stress index), and the information related to the surrounding environment (e.g., Seogwipo-si, Jeju-do, rain). The computing device may obtain the prompt "Recommend places suitable for relaxation for a teenage girl on a rainy day in Seogwipo-si, Jeju-do' in response to the dialogue, "Where shall we go today?"

In an embodiment, the operation of obtaining the prompt based on the personal information, which has been described with reference to FIG. 10, may be used as an operation of obtaining a variety of content other than the prompt. An operation of transforming a dialogue into content based on personal information may be performed through a dialogue-content generative model that generates, from a dialogue, content corresponding to the dialogue.

In an embodiment, content in the dialogue-content generative model may include a variety of content, such as images, videos, code, and text.

For example, the operation of transforming the dialogue into the image based on the personal information may be performed through the dialogue-image generative model 800 described with reference to FIG. 8, instead of the prompt generative model and the image generative model. For example, when information related to personal identification (e.g., female, 12 years old) is obtained, the computing device may transform a dialogue into an image based on the information related to the personal identification, and the transformed image may include an image of a character that is highly preferred by 12-year-old girls.

As another example, an operation of transforming a dialogue into a video based on personal information may be performed through a dialogue-video generative model that generates, from a dialogue, a video corresponding to the dialogue.

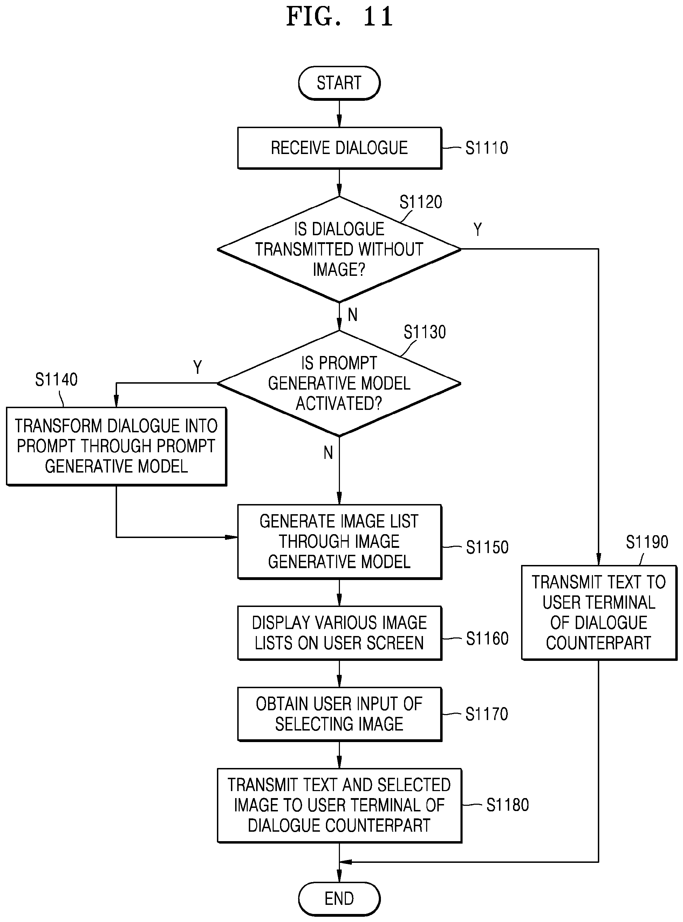

FIG. 11 is a flowchart for describing a method of performing communication with a counterpart user based on an image generated by using a prompt generative model, according to an embodiment of the present disclosure.

Referring to FIG. 11, in operation S1110, the computing device may receive a dialogue. Since the description of operation S1110 is redundant with the description provided with reference to operation S210 of FIG. 2, the description thereof is omitted.

In operation S1120, the computing device may determine whether to transmit the dialogue without an image. The computing device may determine whether to transmit a dialogue between users to a terminal of a counterpart user.

In an embodiment, the computing device may obtain, from a user who inputs a dialogue between users, a user input of determining whether to transmit the dialogue without an image. The computing device may determine, based on the obtained user input, whether to transmit the dialogue without an image.

When it is determined in operation S1120 to transmit the dialogue with an image, operation S1130 may be performed.

In operation S1130, the computing device may determine whether to transform the dialogue into a prompt by activating a prompt generative model. In operation S1140, when the prompt generative model is activated, the computing device may transform the dialogue into the prompt by using the prompt generative model. Since the description of the operation according to operation S1140 is redundant with the description provided with reference to FIGS. 1 to 10, the description thereof is briefly provided.

In an embodiment, the computing device may transform the dialogue into the prompt by using the prompt generative model. The generated prompt may include a description reflecting the context of the dialogue. The obtained prompt may include a description of an action of an object corresponding to the context of the dialogue. The generated prompt may include at least one of a description of an image effect, a description of text to be inserted, and a description of selection of an object.

In operation S1150, the computing device may generate an image list by using an image generative model.

In an embodiment, when the prompt generative model is activated, the computing device may transform the generated prompt into at least one image by using the image generative model. The computing device may generate the image list based on the transformed at least one image. The image generative model may include the image generative model 300 that generates the image from the prompt, which has been described with reference to FIG. 1.

In an embodiment, when the prompt generative model is not activated, the computing device may transform the input dialogue of the user into at least one image by using the image generative model. The computing device may generate the image list based on the transformed at least one image. The image generative model in operation S1150 may include the dialogue-image generative model 800 that generates the image from the dialogue, which has been described with reference to FIG. 8.

In operation S1160, the computing device may display the generated image list. The computing device may display the image list through a user display.

In operation S1170, the computing device may obtain a user input of selecting one image from the image list.

In operation S1180, the computing device may transmit, based on the obtained user input, the text and the selected image to a user terminal of a dialogue counterpart. In addition, the computing device may display, based on the obtained user input, a situation in which the text and the selected image are transmitted to the user terminal of the dialogue counterpart.

When it is determined in operation S1120 to transmit the dialogue with an image, operation S1190 may be performed. In operation S1190, the computing device may transmit the input dialogue to the user terminal of the dialogue counterpart.

Hereinafter, the configuration of the computing device for performing the above-described image generation operations is described with reference to FIG. 12. FIG. 12 is a diagram for describing a configuration of a computing device for performing image generation by using a prompt generative model, according to an embodiment of the present disclosure.

Referring to FIG. 12, a computing device 1000 according to an embodiment may include an input/output interface 1100, memory 1200, and a processor 1300. However, the elements of the computing device 1000 are not limited to the examples described above, and the computing device 1000 may include more elements than the elements described above, or may include fewer elements than the elements described above. In an embodiment, all or part of the input/output interface 1100, the memory 1200, and the processor 1300 may be implemented in the form of a single chip, and the processor 1300 may include one or more processors.

The input/output interface 1100 may include an input interface (e.g., a touchscreen, a hard button, a microphone, etc.) for receiving control commands or information from a user and an output interface (e.g., a display panel, a speaker, etc.) for displaying the result of performing operations according to a user's control or the state of the computing device 1000.

The memory 1200 may be configured to store various programs or data, and may be configured as a storage medium, such as read-only memory (ROM), random access memory (RAM), hard disk, compact disc read-only memory (CD-ROM), and digital versatile disc (DVD), or a combination of storage media. The memory 1200 may not exist separately and may be configured to be included in the processor 1300. The memory 1200 may include a volatile memory, a non-volatile memory, or a combination of a volatile memory and a non-volatile memory. The memory 1200 may store programs or instructions for performing the operations according to the embodiments described above with reference to FIGS. 1 to 11. The memory 1200 may provide the stored data to the processor 1300 in response to a request from the processor 1300.

The processor 1300 is an element that controls a series of processes so that the computing device 1000 operates according to the embodiments described with reference to FIGS. 1 to 11, and may include one or more processors. In this case, the one or more processors may be a generic-purpose processor, such as a central processing unit (CPU), an application processor (AP), or a digital signal processor (DSP), a dedicated graphics processor, such as a graphics processing unit (GPU) or a vision processing unit (VPU), or a dedicated AI processor, such as a neural processing unit (NPU). For example, when the one or more processors are dedicated AI processors, the dedicated AI processors may be designed with a hardware structure specialized for processing a specific AI model.

The processor 1300 may write data to the memory 1200 or read data stored in the memory 1200. In particular, the processor 1300 may execute a program or instructions stored in the memory 1200 to process data in accordance with predefined operation rules or AI models. Accordingly, the processor 1300 may perform the operations described in the embodiments described above, and the operations described as being performed by the computing device 1000 in the embodiments described above may be regarded as being performed by the processor 1300 unless otherwise specified.

A method according to an embodiment may include receiving a dialogue. The method may include obtaining a prompt corresponding to the dialogue by inputting the dialogue to a prompt generative model. The method may include obtaining an image by inputting the prompt to an image generative model. The prompt may include a description reflecting a context of the dialogue. The prompt generative model may be a language model trained through a plurality of dialogue-prompt pairs.

In an embodiment, the prompt may include a description of an action of an object corresponding to the context of the dialogue.

In an embodiment, the prompt may include at least one of a description of an image effect, a description of text to be inserted, and a description of selection of an object.

In an embodiment, the obtaining of the prompt may include combining at least one dialogue-prompt example pair and the dialogue. The obtaining of the prompt may include obtaining the prompt corresponding to the dialogue by inputting a combination of the at least one dialogue-prompt example pair and the dialogue to the prompt generative model. The prompt generative model may output the prompt corresponding to the dialogue based on a relationship between a dialogue example and a prompt example included in the at least one dialogue-prompt example pair.

In an embodiment, the combining of the at least one dialogue-prompt example pair and the dialogue may include listing the at least one dialogue-prompt example pair and the dialogue.

In an embodiment, the method may further include obtaining at least one dialogue-prompt example pair that is different from the plurality of dialogue-prompt pairs. The method may further include training the prompt generative model by comparing the prompt with the at least one dialogue-prompt example pair.

In an embodiment, the obtaining of the image may include determining a style for generating the image. The obtaining of the image may include obtaining an image corresponding to the prompt based on the determined style.

In an embodiment, the obtaining of the prompt may include obtaining personal information about a subject of the dialogue. The obtaining of the prompt may include obtaining a prompt corresponding to the dialogue based on the personal information.

In an embodiment, the personal information may include at least one of information about personal identification of the subject of the dialogue, information about a place where the subject of the dialogue is located, and information about weather at the place.

In an embodiment, the obtained image may include a plurality of images describing the dialogue. The method may further include obtaining a user input of selecting a first image from the plurality of images. The method may further include transmitting, based on the user input, at least one of the first image and the dialogue to an external user terminal.

There may be provided a non-transitory computer-readable recording medium having recorded thereon a program for causing a computer to perform any one of the methods according to an embodiment of the present disclosure.

A computing device according to an embodiment may include an input/output interface, memory, and at least one processor. The input/output interface may receive a user input of requesting image processing. The input/output interface may output an image processed according to the user input. The memory may store instructions for processing an image. The at least one processor may execute the instructions. The at least one processor may receive a dialogue. The at least one processor may obtain a prompt corresponding to the dialogue by inputting the dialogue to a prompt generative model. The at least one processor may obtain an image by inputting the prompt to an image generative model. The prompt may include a description reflecting a context of the dialogue. The prompt generative model may be a language model trained through a plurality of dialogue-prompt pairs.

In an embodiment, the prompt may include a description of an action of an object corresponding to the context of the dialogue.

In an embodiment, the prompt may include at least one of a description of an image effect, a description of text to be inserted, and a description of selection of an object.

In an embodiment, to obtain the prompt, the at least one processor may combine the dialogue and at least one dialogue-prompt example pair that is different from the plurality of dialogue-prompt pairs, and obtain a prompt corresponding to a combination of the at least one dialogue-prompt example pair and the dialogue by inputting the combination of the at least one dialogue-prompt example pair and the dialogue to the prompt generative model.

In an embodiment, In combining the at least one dialogue-prompt example pair and the dialogue, the at least one processor may list the at least one dialogue-prompt example pair and the dialogue.

In an embodiment, the at least one processor may obtain at least one dialogue-prompt example pair that is different from the plurality of dialogue-prompt pairs, and may train the prompt generative model by comparing the prompt with the at least one dialogue-prompt example pair.

In an embodiment, in obtaining the image, the at least one processor may determine a style for generating an image and obtain an image corresponding to the prompt based on the determined style.

In an embodiment, to obtain the prompt, the at least one processor may obtain personal information about a subject of the dialogue and obtain a prompt corresponding to the dialogue based on the personal information.

In an embodiment, the obtained image may include a plurality of images describing the dialogue. The at least one processor may obtain a user input of selecting a first image from the plurality of images and transmit, based on the user input, at least one of the first image and the dialogue to an external user terminal.

Various embodiments of the present disclosure may be implemented or supported by one or more computer programs, and the computer programs may be formed from computer-readable program code and recorded on a computer-readable medium. In the present disclosure, the "application" and the "program" may refer to one or more computer programs, software components, instruction sets, procedures, functions, objects, classes, instances, associated data, or parts thereof, which are suitable for implementation in computer-readable program code. The "computer-readable program code" may include various types of computer code, including source code, object code, and executable code. The "computer-readable medium" may include various types of media that are accessible by a computer, such as ROM, RAM, hard disk drive (HDD), compact disc (CD), DVD, or other types of memory.

In addition, a storage medium that is readable by a machine may be provided in the form of a non-transitory storage medium. The 'non-transitory storage medium' is a tangible device and may exclude wired, wireless, optical, or other communication links that transmit temporary electrical or other signals. On the other hand, the 'non-transitory storage medium' does not distinguish between a case where data is semi-permanently stored on the storage medium and a case where data is temporarily stored. For example, the 'non-transitory storage medium' may include a buffer in which data is temporarily stored. The computer-readable recording medium may be any available media that are accessible by a computer and may include any volatile and non-volatile media and any removable and non-removable media. The computer-readable medium includes a medium on which data may be permanently stored and a medium on which data may be stored and overwritten later, for example, a rewritable optical disk or an erasable memory device.

The methods according to various embodiments may be provided by being included in a computer program product. The computer program product may be traded between a seller and a buyer as a commodity. The computer program product may be distributed in the form of a machine-readable storage medium (e.g., CD-ROM), or may be distributed (e.g., downloaded or uploaded) online either via an application store or directly between two user devices (e.g., smartphones). In the case of the online distribution, at least a part of a computer program product (e.g., a downloadable app) is stored at least temporarily on a machine-readable storage medium, such as a server of a manufacturer, a server of an application store, or memory of a relay server, or may be temporarily generated.

The foregoing description of the present disclosure is for illustrative purposes only, and those of ordinary skill in the art to which the present disclosure pertains will understand that modifications into other specific forms may be made thereto without changing the technical spirit or essential features of the present disclosure. For example, appropriate results may be achieved even when the technologies described above are performed in an order different from the methods described above, and/or components of the computer system or modules described above are coupled or combined in a manner different from the methods described above or are replaced or substituted by other components or equivalents. Therefore, it should be understood that the embodiments described above are illustrative in all respects and are not restrictive. For example, components described as a single entity may be implemented in a distributed manner. Similarly, components described as distributed may be implemented in a combined manner.

The scope of the present disclosure is indicated by the claims described below, and all changes or modifications derived from the meaning and scope of the claims and the equivalent concepts thereof should be interpreted as falling within the scope of the present disclosure.

## Claims

1. A method comprising:
receiving a dialogue (10);
obtaining a prompt (20) corresponding to the dialogue (10) by inputting the dialogue to a prompt generative model (200); and
obtaining an image (30) by inputting the prompt (20) to an image generative model (300),
wherein the prompt comprises a description reflecting a context of the dialogue, and
the prompt generative model is a language model trained through a plurality of dialogue-prompt pairs.

2. The method of claim 1, wherein the prompt further comprises a description of an action of an object corresponding to the context of the dialogue.

3. The method of claim 2, wherein the prompt further comprises at least one of a description of an image effect, a description of a text to be inserted, and a description of a selection of the object.

4. The method of any one of claims 1 to 3, wherein the obtaining of the prompt comprises:
combining at least one dialogue-prompt example pair and the dialogue; and
obtaining the prompt (620) corresponding to the dialogue by inputting a combination (610) of the at least one dialogue-prompt example pair and the dialogue to the prompt generative model (200),
wherein the prompt generative model (200) outputs the prompt (620) corresponding to the dialogue based on a relationship between a dialogue example and a prompt example included in the at least one dialogue-prompt example pair.

5. The method of any one of claims 1 to 3, further comprising:
obtaining at least one dialogue-prompt example pair that is different from the plurality of dialogue-prompt pairs; and
training the prompt generative model (200) by comparing the prompt (720) with the at least one dialogue-prompt example pair (715).

6. The method of any one of claims 1 to 5, wherein the obtaining of the image comprises:
determining a style for generating the image; and
obtaining the image corresponding to the prompt based on the determined style.

7. The method of any one of claims 1 to 6, wherein the obtaining of the prompt comprises:
obtaining personal information about a subject of the dialogue; and
obtaining a prompt corresponding to the dialogue based on the personal
information.

8. The method of claim 7, wherein the personal information comprises at least one of information about personal identification of the subject of the dialogue, information about a place where the subject of the dialogue is located, and information about weather at the place.

9. The method of any one of claims 1 to 8, wherein the obtained image comprises a plurality of images describing the dialogue, and
the method further comprises:
obtaining a user input of selecting a first image from the plurality of images; and
transmitting, based on the user input, at least one of the first image and the dialogue to an external user terminal.

10. A non-transitory computer-readable recording medium having recorded thereon a program for causing a computer to perform the method of any one of claims 1 to 9.

11. A computing device comprising:
an input/output interface configured to receive a user input of requesting image processing and output an image processed according to the user input;
memory storing instructions for processing an image; and
at least one processor configured to execute the instructions to:
receive a dialogue;
obtain a prompt corresponding to the dialogue by inputting the dialogue to a prompt generative model; and
obtain an image by inputting the prompt to an image generative model,
wherein the prompt comprises a description reflecting a context of the dialogue, and
the prompt generative model is a language model trained through a plurality of dialogue-prompt pairs.

12. The computing device of claim 11, wherein the prompt comprises a description of an action of an object corresponding to the context of the dialogue.

13. The computing device of claim 11 or 12, wherein, to obtain the prompt, the at least one processor is further configured to:
combine at least one dialogue-prompt example pair and the dialogue; and obtain the prompt corresponding to the dialogue by inputting a combination of the at least one dialogue-prompt example pair and the dialogue to the prompt generative model,
wherein the prompt generative model outputs the prompt corresponding to the dialogue based on a relationship between a dialogue example and a prompt example included in the at least one dialogue-prompt example pair.

14. The computing device of any one of claims 11 to 13, wherein, to obtain the prompt, the at least one processor is further configured to:
obtain personal information about a subject of the dialogue; and
obtain a prompt corresponding to the dialogue based on the personal information.

15. The computing device of any one of claims 11 to 14, wherein the obtained image comprises a plurality of images describing the dialogue, and
the at least one processor is further configured to:
obtain a user input of selecting a first image from the plurality of images; and
transmit, based on the user input, at least one of the first image and the dialogue to an external user terminal.
